# EUROPÄISCHE PATENTSCHRIFT

(11) **EP 3 099 446 B1**
(45) Veröffentlichungstag und Bekanntmachung des Hinweises auf die Patenterteilung: **25.04.2018**
(21) Anmeldenummer: 15711067.7
(22) Anmeldetag: 06.03.2015
(51) Int. Cl.: B23K 26/34, B23P 6/00, F01D 5/00

(54) **LASERAUFTRAGSCHWEISSEN VON HOCHWARMFESTEN SUPERLEGIERUNGEN MITTELS OSZILLIERENDER STRAHLFÜHRUNG**
LASER BUILT UP WELDING OF HIGH TEMPERATURE SUPERALLOYS WITH A WEAVING ENERGY BEAM
SOUDAGE PAR RECHARGEMENT DE SUPER-ALLIAGES REFRACTAIRES AVEC MOUVEMENT OSCILLANT DU FAISCEAU D'ÉNERGIE

(30) Priorität: 01.04.2014 DE 102014206143
(43) Veröffentlichungstag der Anmeldung: 07.12.2016
(73) Patentinhaber: Siemens Aktiengesellschaft, 80333 München (DE); Fraunhofer-Gesellschaft zur Förderung der angewandten Forschung e.V., 80686 München (DE)
(72) Erfinder: LINNENBRINK, Stefanie, 52372 Kreuzau (DE); MENTZEL, Frank, 52066 Aachen (DE); PIRCH, Norbert, 52074 Aachen (DE); ARJAKINE, Nikolai, 10555 Berlin (DE); BOSTANJOGLO, Georg, 14163 Berlin (DE); BURBAUM, Bernd, 14612 Falkensee (DE); OTT, Michael, 45470 Mülheim an der Ruhr (DE); PIEGERT, Sebastian, 03222 Lübbenau (DE); GASSER, Andres, 52066 Aachen (DE)
(74) Vertreter: Maier, Daniel Oliver
(86) Internationale Anmeldenummer: PCT/EP2015/054716
(87) Internationale Veröffentlichungsnummer: WO 2015/150019

(56) Entgegenhaltungen:
- EP-A1- 2 311 597

## Beschreibung

### Technisches Gebiet

Die Erfindung betrifft ein Verfahren zum schichtweisen Erstellen einer aufgetragenen Struktur (Auftragsstruktur) aus hochwarmfesten Superlegierungen auf einem Substrat, wie dies der EP-A-2311597 zu entnehmen ist.

### Technischer Hintergrund

Laufschaufeln von Gasturbinen werden im Betrieb hohen Temperaturen und starken mechanischen Belastungen ausgesetzt. Für derartige Bauteile werden daher bevorzugt hochwarmfeste Nickelbasis-Superlegierungen verwendet, die durch Ausscheidung einer γ'-Phase gefestigt werden können. Dennoch können mit der Zeit Risse in den Laufschaufeln auftreten, die sich im Laufe der Zeit weiter ausdehnen. Solche Risse können etwa aufgrund der extremen mechanischen Belastung beim Betrieb einer Gasturbine entstehen, sie können aber auch bereits während des Herstellungsprozesses auftreten. Da das Herstellen von Turbinenschaufeln und anderen Werkstücken aus derartigen Superlegierungen aufwendig und kostenintensiv ist, ist man bestrebt, möglichst wenig Ausschuss in der Herstellung zu produzieren und eine lange Lebensdauer der hergestellten Produkte sicher zu stellen.

Im Betrieb befindliche Gasturbinenschaufeln werden regelmäßig gewartet und gegebenenfalls ausgetauscht, wenn aufgrund betriebsbedingter Beanspruchung ein einwandfreies Funktionieren nicht mehr ohne Weiteres sichergestellt werden kann. Um einen weiteren Einsatz ausgetauschter Turbinenschaufeln zu ermöglichen, werden diese soweit möglich wieder aufgearbeitet. Sie können dann erneut in einer Gasturbine zum Einsatz kommen. Im Rahmen einer derartigen Wiederaufarbeitung kann beispielsweise ein Auftragschweißen einer Auftragsstruktur auf das schadhafte Werkstück in den beschädigten Bereichen nötig sein, um die ursprüngliche Wandstärke oder Form des Werkstücks wieder herzustellen. Dies kann gegebenenfalls nach einem Entfernen der Schadstelle beispielsweise durch Fräsen geschehen.

Auch Turbinenschaufeln, die bereits beim Herstellungsprozess Risse erhalten haben, können auf diese Weise mit Auftragschweißen einsatztauglich gemacht werden, so dass der Ausschuss bei der Herstellung vermindert werden kann.

Viele hochwarmfeste Superlegierungen sind jedoch mittels konventioneller Schweißverfahren nur schwierig schweißbar. Die erzeugten Auftragsstrukturen besitzen häufig unbefriedigende Materialeigenschaften, was auf die Ausbildung einer kolumnaren Erstarrungsfront bei der Erstarrung des im Zuge des Auftragschweißens aufgeschmolzenen Materials zurückgeführt werden kann.

Es besteht daher Bedarf an einem Schweißverfahren, welches sich insbesondere für hochwarmfeste Superlegierungen wie γ'-gehärtete Nickelbasis-Superlegierungen eignet und die oben genannten Nachteile nicht oder nur in verringertem Maße aufweist.

### Zusammenfassung der Erfindung

Die Erfindung führt daher ein Verfahren zum schichtweisen Erstellen einer Auftragsstruktur aus hochwarmfesten Superlegierungen auf einem Substrat, beispielsweise auf einem Werkstück wie einer Gasturbinenschaufel, ein. Bei dem Verfahren wird ein die hochwarmfeste Superlegierung enthaltendes Aufbaumaterial auf das Substrat aufgebracht und von einem Energiestrahl in einem Arbeitspunkt aufgeschmolzen. Als Energiestrahl kann insbesondere ein Laserstrahl, vorzugsweise ein kontinuierlicher Laserstrahl, verwendet werden. Das Aufbaumaterial kann beispielsweise als Pulver oder als Draht zugeführt werden. Es wird vorzugsweise kontinuierlich während der Bearbeitung mit dem Energiestrahl zugeführt, was im Falle eines pulverförmigen Aufbaumaterials beispielsweise durch ein Fördergas oder bei Verwendung eines drahtförmigen Aufbaumaterials durch Vorschieben des Drahtes geschehen kann.

Der Arbeitspunkt wird entlang einer Hauptbewegungsrichtung über das Substrat geführt und schwingt dabei quer zu der Hauptbewegungsrichtung. Erfindungsgemäß schwingt der Arbeitspunkt dabei von einem ersten Rand einer jeweiligen Schicht der Auftragsstruktur zu einem zweiten Rand der jeweiligen Schicht der Auftragsstruktur. Dabei ist eine Zeitspanne zwischen einem Verlassen eines jeweiligen Randes von erstem und zweitem Rand und einer unmittelbar auf das Verlassen folgenden Rückkehr zu dem jeweiligen Rand von erstem und zweitem Rand so bemessen, dass ein Schmelzbad an dem jeweiligen Rand von erstem und zweitem Rand während der Zeitspanne zu einer breiigen Zone erstarrt. Als breiige Zone (Englisch "mushy zone") wird ein Gemisch aus flüssigen und zahlreichen ungeordnet erstarren Bestandteilen bezeichnet.

Die Erfindung unterdrückt ein unerwünschtes kolumnares Wachstum, indem ein im Zuge des Auftragschweißens zu einem jeweiligen Zeitpunkt und an einem jeweiligen Ort gebildetes Schmelzbad bis zu der durch die Schwingungsbewegung quer zur Hauptbewegungsrichtung bedingten Rückkehr des Energiestrahls an diesen Ort (beziehungsweise aufgrund der Bewegung in der Hauptbewegungsrichtung in dessen Nähe) das zu einer breiigen Zone abgekühlte Schmelzbad erneut aufschmilzt.

Durch die oszillatorische Bewegung quer zur Hauptbewegungsrichtung wird die Ausdehnung der breiigen Zone normal zur Solidusgrenzfläche reduziert und damit das Ausmaß von Mikroseigerungen und Ausscheidung von Laves-Phasen reduziert. Darüber hinaus werden Erstarrungsbedingungen realisiert, die ein globulitisches Wachstum favorisieren. Durch das wiederholte Zurückschmelzen der Dendriten können Dendritenfragmente in der Schmelze verbleiben und stehen als Keime für das globulitische Wachstum zur Verfügung. Beim Auftragschweißen wird ein globulitisches Wachstum in der Auftragsstruktur angestrebt, da eine Auftragsstuktur mit einem kolumnaren Wachstum zur Rissbildung neigt.

Aufgrund der Bewegung des Arbeitspunktes entlang der Hauptbewegungsrichtung wird eine jeweilige Stelle mit der Zeit bei den weiteren Rückkehren des Arbeitspunktes immer weniger aufgewärmt, so dass das dort aufgebrachte Auftragsmaterial schließlich vollständig erstarren kann. Die Erfindung besitzt hierbei jedoch den weiteren Vorteil, dass eine jeweilige Schicht der Auftragsstruktur über ihre gesamte Breite in einem Arbeitsgang aufgebaut werden kann, wobei auch Auftragsstrukturen mit variierenden Breiten erstellt werden können. Das erfindungsgemäße Verfahren ermöglicht auf diese Weise eine besonders schnelle Fertigstellung der zu erstellenden Auftragsstruktur.

Werden mit dem erfindungsgemäßen Verfahren Auftragsstrukturen variierender Breite auf das Substrat aufgebracht, wird die Amplitude der Oszillationsbewegung quer zur Hauptbewegungsrichtung entsprechend vergrößert. Dabei kann eine Geschwindigkeit des Arbeitspunktes in der Hauptbewegungsrichtung verringert werden, wenn die Breite der zu erstellenden Auftragsstruktur zunimmt, oder erhöht werden, wenn die Breite der zu erstellenden Auftragsstruktur abnimmt. Zusätzlich oder alternativ kann die Leistung des Energiestrahls angepasst werden, wobei die Leistung erhöht werden kann, wenn die Breite der zu erstellenden Auftragsstruktur zunimmt, und die Leistung gesenkt werden kann, wenn die Breite der zu erstellenden Auftragsstruktur abnimmt.

Der Arbeitspunkt kann beispielsweise in einer sinusförmigen Bewegung über das Substrat geführt werden. Es ist aber auch möglich, den Arbeitspunkt zusätzlich zu der Bewegung quer zu der Hauptbewegungsrichtung eine abwechselnde Vorwärts- und Rückwärtsbewegung in der Hauptbewegungsrichtung durchführen zu lassen, so dass sich im Mittel eine Bewegung des Arbeitspunktes in der Hauptbewegungsrichtung ergibt, der Arbeitspunkt aber auch bezogen auf die Hauptbewegungsrichtung schwingt. Das heißt, der Arbeitspunkt kann beispielsweise entlang der Hauptbewegungsrichtung in einer Überlagerung einer Bewegung mit konstanter Geschwindigkeit und einer schwingenden Bewegung geführt werden.

Die Auftragsstruktur kann aus einer Mehrzahl von aufeinander angeordneten Schichten gebildet werden, wobei besonders bevorzugt ein Rand einer auf einer ersten Schicht angeordneten zweiten Schicht über einen Rand der ersten Schicht hinausragen kann. Die über den Rand der ersten Schicht herausragende zweite Schicht wird an ihrem Rand dabei während des Aufschmelzens durch den Energiestrahl aufgrund von Oberflächenspannungseffekten gehalten. Der Rand der zweiten Schicht kann beispielsweise um eine Strecke von 10 bis 100 Mikrometern über den Rand der ersten Schicht hinausragen. Der jeweils mögliche Überhang wird dabei unter anderem von dem Durchmesser des Schmelzbades beeinflusst. Die Oszillation des Arbeitspunktes quer zur Hauptbewegungsrichtung vergrößert dabei vorteilhaft den Durchmesser des Schmelzbades, so dass das erfindungsgemäße Verfahren besonders geeignet ist, größere Überhänge zu erzeugen.

Durch den Überhang wird es möglich, Auftragsstrukturen zu erstellen, deren Rand um eine Strecke von 100 Mikrometern und mehr über einen Rand des Substrates hinausragen, was den Vorteil ergibt, dass das Substrat mit der Auftragsstruktur nach Abschluss des Verfahrens durch Fräsen oder ähnliche Methoden in eine endgültige erwünschte Form gebracht werden kann. Würde die Auftragsstruktur dabei nicht oder nur weniger als 100 Mikrometer über den Rand des Substrates hinausragen, würde ein dabei eingesetztes Fräswerkzeug nicht greifen beziehungsweise müsste so geführt werden, dass mehr Material als gewünscht abgetragen wird.

Die Zeitspanne, während der der Arbeitspunkt vom ersten Rand zum zweiten Rand der jeweiligen Schicht der Auftragsstruktur und zurück bewegt wird, kann zwischen 5 und 100 Millisekunden, vorzugsweise zwischen 10 und 50 Millisekunden, betragen. Der Arbeitspunkt wird also bevorzugt viele Male pro Sekunde quer zu der Hauptbewegungsrichtung von einem Rand der bearbeiteten Schicht zum anderen bewegt.

Eine mittlere Geschwindigkeit des Arbeitspunktes entlang der Hauptbewegungsrichtung kann zwischen 100 und 1000 Millimeter pro Minute, vorzugsweise zwischen 300 und 700 Millimeter pro Minute, betragen. Das erfindungsgemäß Verfahren ermöglicht eine hohe Arbeitsgeschwindigkeit beim Erstellen der Auftragsstruktur. Die absolute Geschwindigkeit des Arbeitspunktes ist aufgrund der Oszillationsbewegung quer zur Hauptbewegungsrichtung deutlich höher, beispielsweise zwischen 2500 und 10000 Millimeter pro Minute, vorzugsweise zwischen 4000 und 8000 Millimeter pro Minute.

Ein Abstand zwischen dem ersten und dem zweiten Rand der jeweiligen Schicht der Auftragsstruktur beträgt bevorzugt zwischen 1 und 10 Millimeter, besonders bevorzugt zwischen 1 und 4 Millimeter. Bei Auftragsstrukturen dieser Breite können die besten Ergebnisse erzielt werden. Für deutlich größere Breiten können die Parameter des Verfahrens nicht mehr praktikable Werte annehmen.

Das erfindungsgemäße Verfahren ist besonders für die Bearbeitung von Gasturbinenkomponenten wie Leit- oder Laufschaufeln geeignet. Daher ist das Substrat vorzugsweise eine Gasturbinenschaufel, wobei die Auftragsstruktur auf einer Spitze der Gasturbinenschaufel oder auf einer Ober- oder Seitenfläche einer Schaufelplattform der Gasturbinenschaufel aufgebracht wird. Die Spitze einer Gasturbinenschaufel und die Schaufelplattform sind im Betrieb einer Gasturbine der größten Abnutzung ausgesetzt.

### Kurzbeschreibung der Abbildungen

Die Erfindung wird nachfolgend anhand von Abbildungen von Ausführungsbeispielen näher erläutert. Es zeigen:
Figur 1 eine Gasturbinenschaufel einer Gasturbine in perspektivischer Ansicht;
Figur 2 eine Teilansicht der Gasturbinenschaufel mit durch das erfindungsgemäße Verfahren erstellten Auftragsstrukturen; und
Figur 3 eine Teilansicht eines Querschnitts durch eine durch das erfindungsgemäße Verfahren erstellte Auftragsstruktur.

### Ausführliche Beschreibung der Abbildungen

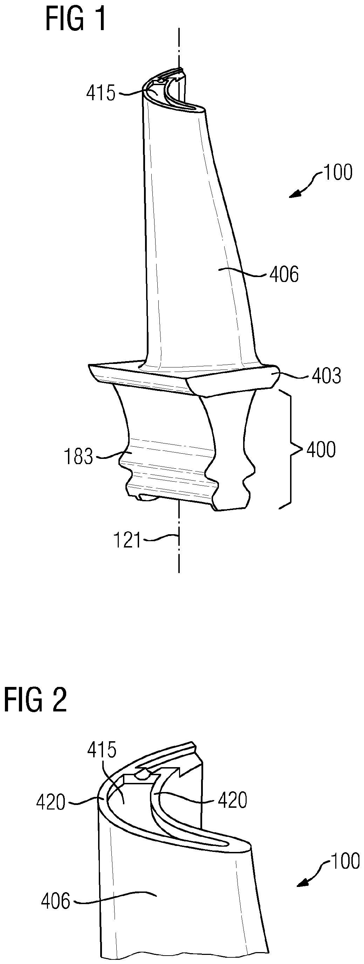

Figur 1 zeigt in perspektivischer Ansicht eine Gasturbinenschaufel 100, die eine Laufschaufel oder Leitschaufel sein kann und sich entlang einer Längsachse 121 erstreckt.

Die Gasturbine kann in einem Flugzeug zum Antrieb oder in einem Kraftwerk zur Elektrizitätserzeugung eingesetzt werden.

Die Schaufel 100 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Wird die Gasturbinenschaufel 100 als Leitschaufel ausgeführt, kann sie an ihrer Schaufelspitze 415 eine weitere Plattform aufweisen (nicht dargestellt).

Im Befestigungsbereich 400 ist ein Schaufelfuß 183 gebildet, der zur Befestigung der Gasturbinenschaufel 100 an einer Welle oder einer Scheibe dient (nicht dargestellt).

Der Schaufelfuß 183 kann beispielsweise als Hammerkopf-, Tannenbaum- oder Schwalbenschwanzfuß ausgeführt sein.

Bei herkömmlichen Schaufeln 100 werden in allen Bereichen 400, 403, 406 der Schaufel 100 vorzugsweise massive metallische Werkstoffe, insbesondere Superlegierungen, verwendet. Solche Superlegierungen sind beispielsweise aus der EP 1 204 776 B1, EP 1 306 454, EP 1 319 729 A1, WO 99/67435 oder WO 00/44949 bekannt.

Die Schaufel 100 kann hierbei durch ein Gussverfahren, auch mittels gerichteter Erstarrung, durch ein Schmiedeverfahren, durch ein Fräsverfahren oder Kombinationen daraus gefertigt werden.

Werkstücke mit ein¬kristalliner Struktur oder Strukturen werden als Bauteile für Maschinen eingesetzt, die im Betrieb hohen mechanischen, thermischen und/oder chemi¬schen Belastun¬gen ausgesetzt sind, wie es bei Gasturbinen der Fall ist.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kris¬talle entlang dem Wärmefluss ausgerichtet und bilden entweder eine stängelkristalline Kornstruktur (kolumnar, d.h. Körner, die über die ganze Länge des Werkstückes verlaufen und hier, dem all¬gemeinen Sprachgebrauch nach, als gerichtet erstarrt bezeich¬net werden) oder eine einkristalline Struktur, d.h. das ganze Werkstück besteht aus einem einzigen Kristall. In diesen Ver¬fahren muss man den Übergang zur globulitischen (polykristal¬linen) Erstarrung meiden, da sich durch ungerichtetes Wachstum notwendigerweise transversale und longitudinale Korngrenzen ausbilden, welche die guten Eigenschaften des gerichtet er¬starrten oder einkristallinen Bauteiles zunichte machen.

Ist allgemein von gerichtet erstarrten Gefügen die Rede, so sind damit sowohl Einkristalle gemeint, die keine Korn¬grenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet er¬starrten Gefügen (directionally solidified structures).

Solche Verfahren sind aus der US-PS 6,024,792 und der EP 0 892 090 A1 bekannt.

Ebenso kann die Schaufel 100 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO2, Y2O3-ZrO2, d.h. sie ist nicht, teilweise oder vollständig stabilisiert durch Yttrium¬Oxid und/oder Kalziumoxid und/oder Magnesiumoxid.
Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile wie die Gasturbinenschaufel 100 nach ihrem Einsatz gegebenenfalls von Schutzschichten befreit werden müssen (z.B. durch Sandstrahlen). Danach kann eine Entfernung der Korrosions- und/oder Oxidationsschichten bzw. -produkte erfolgen. Gegebenenfalls werden auch noch Risse im Bauteil repariert. Insbesondere kann es auch notwendig werden, Strukturen im Bereich der Schaufelspitze 415 oder an den Rändern der Schaufelplattform 403 zu ergänzen, um die ursprüngliche unbeschädigte Form der Gasturbinenschaufel 100 wiederherzustellen. Danach kann eine Wiederbeschichtung des Bauteils und ein erneuter Einsatz des Bauteils erfolgen.

Figur 2 zeigt eine Teilansicht der Gasturbinenschaufel 100 mit durch das erfindungsgemäße Verfahren erstellten Auftragsstrukturen 420. Die Auftragsstruktur 420 ist vorliegend auf der Schaufelspitze 415 der Gasturbinenschaufel 100 angeordnet. Im gezeigten Beispiel sind zwei schmale Wandungen vorgesehen, die an gegenüberliegenden Rändern der Schaufelspitze 415 angeordnet sind und jede für sich eine Auftragsstruktur 420 darstellen. Breite und Höhe der Wandungen können zwischen einem halben Millimeter und einem Zentimeter betragen. Die Auftragsstrukturen 420 können bei einer Laufschaufel zur Abdichtung der Schaufelspitze 415 zu einer gegenüberliegenden Wandung des Gaspfades vorgesehen sein. Dazu wird die Geometrie der Laufschaufel so gewählt, dass es im Betrieb der Gasturbine durch mechanische und thermische Ausdehnung zu einem Kontakt der Schaufelspitze 415 mit der Wandung kommt, wodurch die Schaufelspitze 415 beziehungsweise die darauf angeordnete Auftragsstruktur 420 exakt so weit abgeschliffen wird, wie es erforderlich ist. Gleichzeitig wird dadurch ein dichter Abschluss der Schaufelspitze 415 mit der Wandung erreicht. Bei einem Refurbishment kann auf eine bereits benutzte und überarbeitete Gasturbinenschaufel eine neue Auftragsstruktur 420 aufgebracht werden, um nach erneuter Inbetriebnahme der Gasturbine die beschriebene Prozedur erneut durchführen zu können.

Das erfindungsgemäße Verfahren sieht vor, jede Auftragsstruktur 420 schichtweise aufzubauen und dabei den für das Aufschmelzen des pulverförmigen Aufbaumaterials verwendeten Energiestrahl entlang der langen Ausstreckungsrichtung der Auftragsstruktur 420 als Hauptbewegungsrichtung zu führen, wobei der Arbeitspunkt in Schwenkbewegungen quer zu der Hauptbewegungsrichtung von einem Rand der Auftragsstruktur 420 zu dem gegenüberliegenden bewegt wird. Dadurch kann die Auftragsstruktur mit den obengenannten Vorteilen erstellt werden.

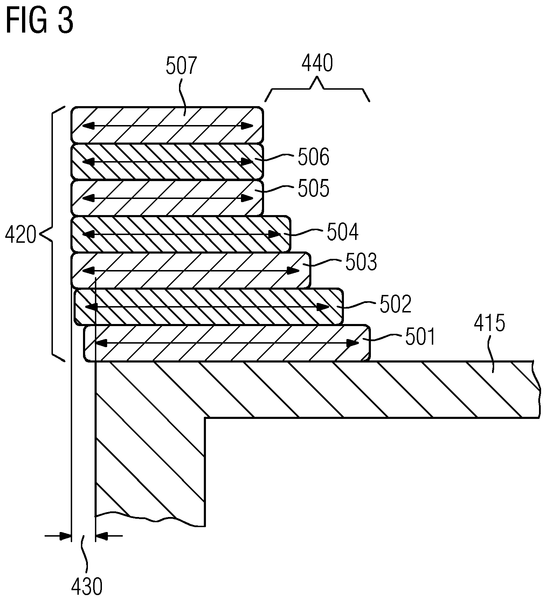

Figur 3 zeigt eine Teilansicht eines Querschnitts durch eine durch das erfindungsgemäße Verfahren erstellte Auftragsstruktur 420, die eine Mehrzahl von aufeinander angeordneten Schichten 501 bis 507 umfasst. Es können selbstverständlich weitere Schichten vorgesehen werden. Die Schichten 501 bis 507 werden auf der Schaufelspitze 415 angeordnet, die als Substrat dient. Zuerst wird die Schicht 501 aufgebracht, auf dieser dann die Schicht 502 usw. Durch Doppelpfeile in den einzelnen Schichten 501 bis 507 wird die Bewegung des Arbeitspunktes über die Breite jeder Schicht 501 bis 507 angezeigt. Die Hauptbewegungsrichtung verläuft in Figur 3 in die Tiefe der Abbildung.

Es zeigt sich, dass der Weg, den der Arbeitspunkt dabei zurücklegt, mit der Breite der Schicht 501 bis 507 variiert. Dementsprechend kann die Zeitspanne, die der Arbeitspunkt für diesen Weg benötigt, entsprechend der Geometrie der zu erstellenden Auftragsstruktur 420 angepasst werden. Das erfindungsgemäße Verfahren ermöglicht es, Schichten 501 bis 507 zu erstellen, die über einen Rand des Substrates 415 hinausragen. Die Strecke, die jede einzelne Schicht über die darunterliegende hinausragen kann, ist dabei durch das jeweilige Aufbaumaterial und die Geometrie der Schicht beziehungsweise des Substrates 415 begrenzt. Daher kann ein gewünschter Überhang 430 über mehrere Schichten 501 bis 507 hinweg gebildet werden, vorliegend über die jeweils weiter als die jeweilige direkt darunter liegende Struktur hinausragenden Schichten 501, 502 und 503. Auf diese Weise kann beispielsweise ein Überhang 430 von 100 bis 200 Mikrometern geformt werden, der vorteilhaft für eine Nachbearbeitung des Werkstücks mit einer Fräse oder dergleichen ist. Auf der dem Überhang 430 gegenüberliegenden Seite der Auftragsstruktur 420 kann eine Kehlnaht 440 gebildet werden, indem die Schichten 501 bis 505 sich auf dieser Seite der Auftragsstruktur 420 mit zunehmender Höhe zurückziehen. Dies bietet einen Vorteil einer zuverlässigeren Verbindung der Auftragsstruktur 420 auf dem Substrat 415 und einer erhöhten Stabilität der Auftragsstruktur 420, weil durch den Radius der Kehlnaht 440 weniger Spannungen und in deshalb weniger Risse im Schweißgut entstehen, als wenn die Auftragsstruktur rechtwinklig aufgeschweißt würde.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Ein Verfahren zum schichtweisen Erstellen einer Auftragsstruktur (420) aus hochwarmfesten Superlegierungen auf einem Substrat (415), bei dem ein die hochwarmfeste Superlegierung enthaltendes Aufbaumaterial auf das Substrat (415) aufgebracht und von einem Energiestrahl in einem Arbeitspunkt aufgeschmolzen wird, wobei der Arbeitspunkt entlang einer Hauptbewegungsrichtung über das Substrat (415) geführt wird und dabei quer zu der Hauptbewegungsrichtung schwingt, wobei der Arbeitspunkt von einem ersten Rand einer jeweiligen Schicht (501, ..., 507) der Auftragsstruktur (420) zu einem zweiten Rand der jeweiligen Schicht (501, ..., 507) der Auftragsstruktur (420) schwingt, **dadurch gekennzeichnet, dass** eine Zeitspanne zwischen einem Verlassen eines jeweiligen Randes von erstem und zweitem Rand und einer unmittelbar auf das Verlassen folgenden Rückkehr zu dem jeweiligen Rand von erstem und zweitem Rand so bemessen ist, dass ein Schmelzbad an dem jeweiligen Rand von erstem und zweitem Rand während der Zeitspanne zu einer breiigen Zone erstarrt.

2. Das Verfahren des vorhergehenden Anspruchs,
bei dem der Arbeitspunkt mit einer mittleren Geschwindigkeit entlang der Hauptbewegungsrichtung geführt wird, wobei eine Momentangeschwindigkeit des Arbeitspunktes eine Vielzahl von Vorzeichenwechseln aufweist.

3. Das Verfahren eines der vorhergehenden Ansprüche,
bei dem die Auftragsstruktur (420) aus einer Mehrzahl von aufeinander angeordneten Schichten (501, ..., 507) gebildet wird und bei dem ein Rand einer auf einer ersten Schicht (501, 502) angeordneten zweiten Schicht (502, 503) über einen Rand der ersten Schicht (501, 502) hinausragt.

4. Das Verfahren des vorhergehenden Anspruchs,
bei dem der Rand der zweiten Schicht (502, 503) um eine Strecke von 10 bis 100 Mikrometern über den Rand der ersten Schicht (501, 502) hinausragt.

5. Das Verfahren eines der Ansprüche 3 oder 4,
bei dem ein Rand der Auftragsstruktur (420) um eine Strecke (430) von wenigstens 100 Mikrometern über einen Rand des Substrates (415) hinausragt.

6. Das Verfahren eines der vorhergehenden Ansprüche,
bei dem die Zeitspanne zwischen 5 und 100 Millisekunden, vorzugsweise zwischen 10 und 50 Millisekunden, beträgt.

7. Das Verfahren eines der vorhergehenden Ansprüche,
bei dem eine mittlere Geschwindigkeit des Arbeitspunktes entlang der Hauptbewegungsrichtung zwischen 100 und 1000 Millimeter pro Minute, vorzugsweise zwischen 300 und 700 Millimeter pro Minute, beträgt.

8. Das Verfahren eines der vorhergehenden Ansprüche,
bei dem eine absolute Geschwindigkeit des Arbeitspunktes zwischen 2500 und 10000 Millimeter pro Minute, vorzugsweise zwischen 4000 und 8000 Millimeter pro Minute, beträgt.

9. Das Verfahren eines der vorhergehenden Ansprüche,
bei dem ein Abstand zwischen dem ersten und dem zweiten Rand der Auftragsstruktur zwischen 1 und 10 Millimeter, vorzugsweise zwischen 1 und 4 Millimeter, beträgt.

10. Das Verfahren eines der vorhergehenden Ansprüche,
bei dem das Substrat (415) eine Gasturbinenschaufel (100) ist und bei dem die Auftragsstruktur (420) auf einer Spitze (415) der Gasturbinenschaufel (100) oder auf einer Seitenfläche einer Schaufelplattform (403) der Gasturbinenschaufel (100) aufgebracht wird.

## Claims

1. A method for the layer-by-layer creation of a deposition structure (420) made of high-temperature superalloys on a substrate (415), in which a build-up material containing the high-temperature superalloy is applied to the substrate (415) and is melted by an energy beam in a working point, wherein the working point is guided over the substrate (415) along a main direction of movement and, in the process, oscillates transversely with respect to the main direction of movement, wherein the working point oscillates from a first edge of a respective layer (501, ..., 507) of the deposition structure (420) to a second edge of the respective layer (501, ..., 507) of the deposition structure (420), **characterized in that** a time span between leaving a respective edge of the first and second edge and returning, immediately after leaving, to the respective edge of the first and second edge is determined such that a melt pool at the respective edge of the first and second edge solidifies, during the time span, to a mushy zone.

2. The method of the preceding claim, in which the working point is guided at an average velocity along the main direction of movement, wherein an instantaneous velocity of the working point changes sign frequently.

3. The method of either of the preceding claims, in which the deposition structure (420) is formed from a plurality of layers (501, ..., 507) arranged one on top of the other, and in which an edge of a second layer (502, 503), arranged on a first layer (501, 502), projects beyond an edge of the first layer (501, 502).

4. The method of the preceding claim, in which the edge of the second layer (502, 503) projects beyond the edge of the first layer (501, 502) by a distance of between 10 and 100 micrometers.

5. The method of either of Claims 3 and 4, in which an edge of the deposition structure (420) projects beyond an edge of the substrate (415) by a distance (430) of at least 100 micrometers.

6. The method of one of the preceding claims,
in which the time span is between 5 and 100 milliseconds, preferably between 10 and 50 milliseconds.

7. The method of one of the preceding claims, in which an average velocity of the working point along the main direction of movement is between 100 and 1000 millimeters per minute, preferably between 300 and 700 millimeters per minute.

8. The method of one of the preceding claims, in which an absolute velocity of the working point is between 2500 and 10 000 millimeters per minute, preferably between 4000 and 8000 millimeters per minute.

9. The method of one of the preceding claims, in which a separation between the first and the second edge of the deposition structure is between 1 and 10 millimeters, preferably between 1 and 4 millimeters.

10. The method of one of the preceding claims, in which the substrate (415) is a gas turbine blade (100) and in which the deposition structure (420) is applied to a tip (415) of the gas turbine blade (100) or to a side face of a blade platform (403) of the gas turbine blade (100).

## Revendications

1. Procédé de production couche par couche d'une structure (420) de rechargement en super-alliages résistants à chaud sur un substrat (415), dans lequel on dépose sur le substrat (415) un matériau de constitution contenant le super-alliage résistant à chaud et on le fond en un point de travail par un faisceau d'énergie, dans lequel on fait passer le point de travail suivant une direction de déplacement principale sur le substrat (415) et on le fait osciller ensuite transversalement à la direction de déplacement principale, dans lequel on fait osciller le point de travail d'un premier bord d'une couche (501, ..., 507) respective de la structure (420) de rechargement à un deuxième bord de la couche (501, ..., 507) respective de la structure (420) de rechargement, **caractérisé en ce que** l'on donne à un laps de temps, entre le fait de quitter un bord respectif parmi le premier et le deuxième bord et, suivant immédiatement le fait de l'avoir quitté, un retour au premier et au deuxième bord respectif, une valeur telle qu'un bain fondu sur le premier et le deuxième bord respectif se solidifie, pendant le laps de temps, en une zone pâteuse.

2. Procédé suivant le revendication précédente,
dans lequel on fait passer le point de travail à une vitesse moyenne le long de la direction de déplacement principale, une vitesse instantanée du point de travail ayant une pluralité de changements de signe.

3. Procédé suivant l'une des revendications précédentes,
dans lequel on forme la structure (420) de rechargement d'une pluralité de couches (501, ..., 507), disposées les unes sur les autres, et dans lequel un bord d'une deuxième couche (502, 503), disposée sur une première couche (501, 502), dépasse d'un bord de la première couche (501, 502).

4. Procédé suivant la revendication précédente,
dans lequel le bord de la deuxième couche (502, 503) dépasse d'une distance de 10 à 100 microns du bord de la première couche (501, 502).

5. Procédé suivant l'une des revendications 3 ou 4,
dans lequel un bord de la structure (420) de rechargement dépasse d'une distance (430) de moins de 100 microns d'un bord du substrat (415).

6. Procédé suivant l'une des revendications précédentes,
dans lequel le laps de temps est compris entre 5 et 100 millisecondes, de préférence entre 10 et 50 millisecondes.

7. Procédé suivant l'une des revendications précédentes,
dans lequel une vitesse moyenne du point de travail, le long de la direction de déplacement principale, est comprise entre 100 et 1000 millimètres à la minute, de préférence entre 300 et 700 millimètres à la minute.

8. Procédé suivant l'une des revendications précédentes,
dans lequel une vitesse absolue du point de travail est comprise entre 2500 et 10000 millimètres à la minute, de préférence entre 4000 et 8000 millimètres à la minute.

9. Procédé suivant l'une des revendications précédentes,
dans lequel une distance entre le premier et le deuxième bord de la structure de rechargement est comprise entre 1 et 10 millimètres, de préférence entre 1 et 4 millimètres.

10. Procédé suivant l'une des revendications précédentes,
dans lequel le substrat (415) est une aube (100) de turbine à gaz et dans lequel on dépose la structure (420) de rechargement sur une pointe (415) de l'aube (100) de la turbine à gaz ou sur une surface latérale d'une plateforme (403) de l'aube (100) de la turbine à gaz.
